# EUROPÄISCHE PATENTSCHRIFT

(11) **EP 0 408 538 B1**
(45) Veröffentlichungstag und Bekanntmachung des Hinweises auf die Patenterteilung: **15.09.1993**
(21) Anmeldenummer: 90890201.8
(22) Anmeldetag: 04.07.1990
(51) Int. Cl.: B21C 37/12, B23K 9/032, B23K 10/00

(54) **Verfahren zur Herstellung von Rohren aus einem Metallband**
Method of producing tubes from a metal strip
Procédé de fabrication de tubes à partir d'une bande métallique

(30) Priorität: 10.07.1989 AT 1667/89
(43) Veröffentlichungstag der Anmeldung: 16.01.1991
(73) Patentinhaber: MOLDRICH METALLWAREN, GESELLSCHAFT M.B.H. & CO. KG, A-1120 Wien (AT)
(72) Erfinder: Patscharis, Lorenz, A-1130 Wien (AT)
(74) Vertreter: Köhler-Pavlik, Johann, Dipl.-Ing.

(56) Entgegenhaltungen:
- DE-B- 2 128 115
- FR-A- 2 338 095
- US-A- 1 929 415
- US-A- 3 332 675
- US-A- 4 101 067

## Beschreibung

Die Erfindung betrifft ein Verfahren zur Herstellung von Rohren aus einem Metallband, wobei das Metallband unter einem spitzen Winkel zur Rohrachse, entsprechend der gewünschten Steigung der Windungen, kontinuierlich zugeführt und anschließend in einer Formschnecke auf den gewünschten Durchmesser zurechtgeformt wird, anschließend die Windungen kontinuierlich und unter Einsatzes eines Formiergases miteinander verschweißt und schließlich Rohrstücke gewünschter Länge abgeschnitten werden. Die Erfindung betrifft weiters eine Vorrichtung zur Durchführung des Verfahrens, enthaltend eine feststehende Zuführeinrichtung für das Metallband, eine Formschnecke mit innenliegenden Anpreßrollen zur Umlenkung des Metallbandes auf den gewünschten Durchmesser, einen Schweißkopf zum Verschweißen der Windungen miteinander und eine Schneideeinrichtung zum Abschneiden der Rohre.

Es ist bekannt, Rohre aus einem Metallband herzustellen, indem dieses schraubenförmig mit den Seitenkanten aneinanderstoßend, geformt wird, worauf die einzelnen Windungen miteinander verschweißt werden. Vorzugsweise ist dabei der Schweißbrenner fix montiert und durch die Zuführung des Metallbandes dreht sich das Rohr um seine Achse, während es gleichzeitig in Achsrichtung vorgeschoben wird. Aufgrund dieser axialen Bewegung muß beim Abschneiden von Rohrstücken bestimmter Länge die Schneideeinrichtung, meist eine Kreissäge oder Trennscheibe, diese Bewegung mitmachen. Zu diesem Zweck wurden die Schneideeinrichtungen verschiebbar gelagert und während des Schneidevorganges von der Stirnfläche des vorgeschobenen Rohres in seiner Richtung durch Druck auf die Seitenfläche des Sägeblattes mitverschoben. Es ist mit diesem Verfahren möglich, durch fortlaufende Zuführung vom Metallband kontinuierlich Rohrstücke von im wesentlichen beliebiger Länge herzustellen. Allerdings ist diese Schneidemethode sehr laut, etwa im Bereich von 110 dB, und hat oftmals zu Beschädigungen der Sägeblätter durch den Vorschubdruck und damit überdies zu Gefährdungen durch davonfliegende Bruchstücke geführt.

Dieses hier beschriebene Verfahren weist aber noch einen zusätzlichen Nachteil auf. Beim Schweißen der Verbindung zwischen den einzelnen Windungen kommt es aufgrund der großen Hitze zum Entstehen von Anlauffarben, das Material des Rohres verbindet sich mit dem Luftsauerstoff zu Metalloxiden. Diese sind wiederum der Ausgangspunkt für Korrosionsprobleme, insbesondere bei Verwendung der Rohre für die Leitung aggressiver Medien, wie etwa als Kaminrohr, wo die Rauchgase das Rohrmaterial angreifen.

Aus diesem Grund ist bereits vorgeschlagen worden, die Schweißung in einer Formiergasatmosphäre, vorzugsweise unter Argon mit einer Beimischung von etwa 10 Vol.-% Wasserstoff, durchzuführen.

Die CH-PS 298 581 zeigt die Herstellung eines Rohres im Spiralverfahren, wobei sowohl an der Rohrinnen- als auch Außenseite geschweißt wird. Die Zufuhr von Formiergas erfolgt dabei allerdings nur durch Elektroden umhüllende Leitungen. Es sind somit keine Vorkehrungen dafür getroffen, das Formiergas solange über der Schweißnaht zu halten, bis diese unter die Reaktionstemperatur ausgekühlt ist, wodurch es nach dem Schweißen doch zu Materialbeeinträchtigungen kommen kann. Daher ist bei diesem Herstellungsverfahren eine Nachbearbeitung des Rohrinneren notwendig. Überdies resultiert die kontinuierliche Zufuhr von Formiergas in einen sehr hohen Gasverbrauch.

Auch die DE-AS 21 28 115 beschreibt ein Verfahren mit kontinuierlicher Zuführung von Schutzgas und damit hohem Gasverbrauch. Die Fertigung der Rohre erfolgt hier allerdings durch Auffalten eines Metallbandes und Schweißen desselben in Richtung seiner Längsachse, d.h. mit gerader Schweißnaht. Das Schutzgas wird in eine gerade Rinne in einem Form- und Abstützeinsatz im Rohrinneren zugeführt, wobei die besagte Rinne in Rohrvorschubrichtung gesehen, immer seichter wird. Dadurch wird eine Verdünnung des Schutzgases und Erhöhung der Sauerstoffkonzentration ermöglicht und der Verbrauch an Schutzgas steigt durch die großen zur Spülung nötigen Mengen erheblich an.

Überdies ist eine derartige Vorgangsweise bei Spiralschweiß-Verfahren zur Rohrherstellung nicht sinnvoll, denn hier würde die Schweißnaht sofort seitlich aus dem Bereich der Schutzgasrinne wandern.

Eine Aufgabe der Erfindung war es daher, ein Verfahren der eingangs beschriebenen Art anzugeben, das zu keinem der erwähnten Nachteile des hergestellten Rohres führt, das also die Materialeigenschaften nicht verändert. Gleichzeitig soll das Formiergas so effektiv und sparsam wie möglich eingesetzt werden.

Eine weitere Aufgabe war es, den Schneidevorgang bei dem erfindungsgemäßen Verfahren sicher, leise und den kontinuierlichen Herstellungsvorgang nicht unterbrechend durchzuführen, ohne die Materialeigenschaften zu verändern.

Dazu ist bei dem erfindungsgemäßen Verfahren vorgesehen, daß das Innere des Rohres in einem exakt begrenzten Bereich um den Schweißpunkt herum mit dem Formiergas gefüllt wird, wobei die Mindestlänge des gasgefüllten Bereiches dadurch exakt bestimmt wird, daß die Schweißnaht bei Verlassen des besagten Bereiches auf eine Temperatur abgekühlt ist, bei der keine Reaktion zwischen dem Rohrmaterial und dem Luftsauerstoff erfolgt.

Nach einem weiteren Merkmal der Erfindung werden die Rohrstücke während des Vorschubes durch einen mitgeführten Plasmaschneider geschnitten und die Rohrinnenwandung im Bereich des Plasmaschneiders bis auf einen kleinen Ausschnitt um den eigentlichen Schnittbereich durch einen Einsatz vor Materialspritzern und Staubablagerungen geschützt. Nach einem weiteren Merkmal wird die Luft aus dem Inneren des besagten Einsatzes zumindest während des Schneidevorganges abgesaugt.

Die Erfindung umfaßt aber auch eine Vorrichtung zur Durchführung des Verfahrens, welche dadurch gekennzeichnet ist, daß im Inneren des gewendelten Bandes, von der Stelle an, an der die Bandwindungen aneinanderliegen, eine Abdichtwand vorgesehen ist, daß eine zweite, etwas weiter in Rohrvorschubrichtung gelegene Abdichtwand vorgesehen ist, die mit der ersten Wand und der Rohrinnenwandung eine Kammer bildet, und daß in der ersten Wand ein Ventil zum Einlassen eines Formiergases in besagte Kammer und in der zweiten Wand ein Ventil zum Auslassen der anfänglich in der Kammer befindlichen Luft angeordnet ist.

Ein weiteres Merkmal der erfindungsgemäßen Vorrichtung ist, daß ein Plasmaschneider zum Schneiden der Rohrstücke vorgesehen ist, und im Inneren des Rohres, zumindest über die Länge des Weges, den der Plasmaschneider zurücklegt, ein Einsatz angeordnet ist, der die Innenwandung des Rohres bis auf einen kleinen Ausschnitt um die Schnittlinie herum abdeckt und derart vor Materialspritzern und Staubablagerungen schützt. Vorzugsweise ist zumindest ein Teil der Innenwand des Einsatzes austauschbar oder durch eine austauschbare, zumindest teilweise Innenauskleidung, vorzugsweise aus Aluminiumblech, geschützt. Der Einsatz ist vorteilhafterweise von der Formiergaskammer etwas beabstandet und an seiner, der besagten Kammer zugewandten Stirnseite von einer in ihrer Größe der zweiten Abdichtwand entsprechenden Stirnwand mit einer über den gesamten Umfang an der Rohrinnenwandung anliegenden Dichtung, vorzugsweise aus Teflon, versehen ist.

Da das Innere des Rohres in einem exakt begrenzten Bereich um den Schweißpunkt herum mit Formiergas gefüllt wird, kann in diesem Bereich eine exakt definierte Zusammensetzung des Gases garantiert werden und es erfolgt nur eine minimale Ausströmung des Gases bzw. Einströmung von Umgebungsluft. Daher reicht eine bestimmte Menge Formiergas für eine lange Zeit der Rohrherstellung, es müssen, wem überhaupt, nur geringe Mengen an Formiergas regelmäßig ersetzt werden. Wenn diese Ersetzung unter Überwachung eines Sauerstoff-Fühlers durchgeführt wird, kann sie exakt auf den jeweiligen Bedarf abgestimmt werden und erhöht so zusätzlich die Wirtschaftlichkeit des erfindungsgemäßen Verfahrens. Die spiralförmige Schweißnaht kann, da das gesamte Rohrinnere mit dem Formiergas gefüllt ist, d.h. die gesamte innere Oberfläche unter der Schutzgasatmosphäre liegt, an keiner Stelle mit dem Luftsauerstoff in Kontakt kommen und bleibt daher bis zu ihrer Abkühlung unter eine ungefährliche, d.h. keine Reaktion zwischen Rohrmaterial und Sauerstoff auslösende, Temperatur der Schweißnaht geschützt. Das Abtrennen der Rohrabschnitte mittels des Plasmaschneiders hat den Vorteil, daß keine mechanischen Beschädigungen des Rohres und des Schneidwerkzeuges befürchtet werden müssen. Dabei wird durch den schützenden Einsatz die innere Rohroberfläche gegen Materialspritzer der heißen, durch den Plasmaschneider weggeschleuderter Teilchen sowie gegen Niederschlag von heißem Staub geschützt, womit auch Beeinträchtigungen der Rohrinnenseite beim Schneiden vermieden sind. Dies kann durch Luftabsaugung, welche zumindest während des Schneidevorganges erfolgt, und den Staub beseitigt, welcher durch die schmalen Zwischenräume zwischen Rohrinnenwandung und Einsatz und somit auf ungeschützte Bereiche der Rohrinnenseite gelangen könnte.

Nachfolgend soll die Erfindung, weitere Merkmale und Vorteile davon, unter Bezugnahme auf die beigefügten Zeichnungen näher erläutert werden.

Dabei zeigt
- Fig. 1: eine schematische Draufsicht auf eine Anlage zur Herstellung von Rohren aus einem Metallband,
- Fig. 2: eine Seitenansicht,
- Fig. 3: eine Draufsicht auf ein Ausführungsbeispiel der erfindungsgemäßen Vorrichtung, und
- Fig. 4: eine perspektivische Ansicht der ersten Abdichtwand.

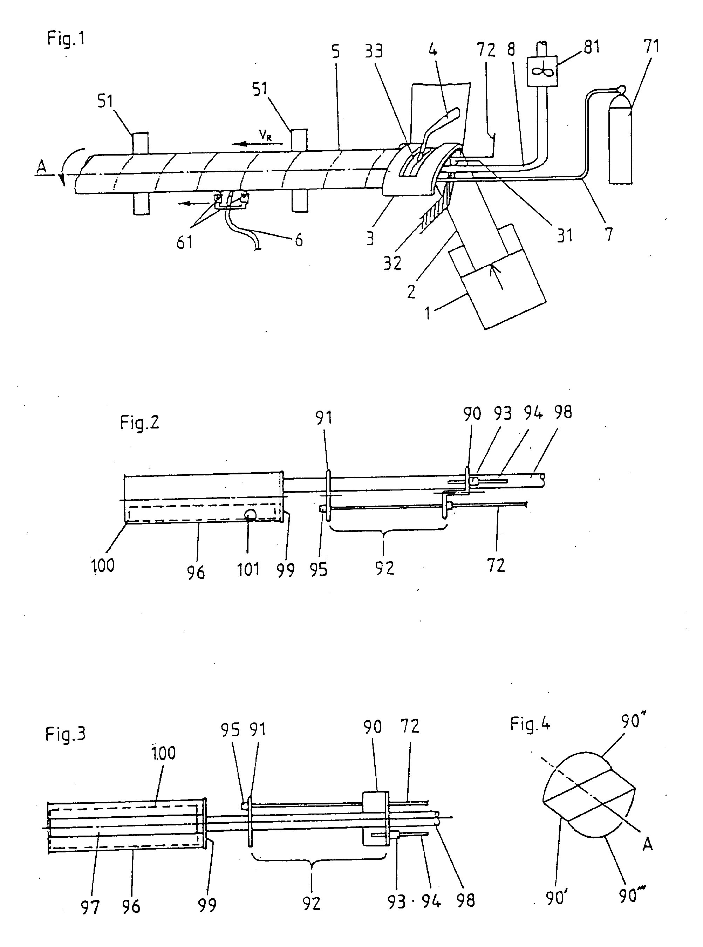

Wie in Fig. 1 dargestellt, wird mittels einer herkömmlichen Zuführeinrichtung 1 ein Metallband 2 zu einer Formschnecke 3 geleitet. Durch diese Schnecke wird das Metallband schraubenförmig geformt, wobei für verschiedene Werte für Bandbreite, Steigung (entsprechend der Anzahl der Windungen pro Länge) und Durchmesser des Rohres jeweils entsprechend gestaltete Formschnecken vorgesehen sind. Im Bereich wo das Metallband von der geradlinigen Zuführbewegung in die schraubenförmig-drehende Bewegung am Beginn der Formschnecke 3 übergeht, sind zur exakten Formung Anpreßrollen 31 auf einem Träger 32 angeordnet. Sie sorgen dafür, daß das Metallband genau an der Innenfläche der Formschnecke 3 anliegt, was von Wichtigkeit für das Aneinanderliegen der einzelnen Windungen des Metallbandes ist. Die Formschnecke 3 ist schließlich noch mit einem Ausschnitt 33 versehen, durch den die Linie, an der die einzelnen Windungen des Metallbandes aneinanderstoßen, zugänglich ist. Hier wird auch der Schweißbrenner 4 zur Verbindung der Windungen durch Schweißverfahren, wie z.B. MIG-Schweißen, angesetzt. Als Schutzgas wird beispielsweise ein Argon-Stickstoff- oder Kohlendioxid-Stickstoff-Gemisch, vorzugsweise ein im Handel unter der Bezeichnung "Noxalic 12" erhältliches Gemisch verwendet. Das verschweißte Rohr 5 wird durch die Zufuhr von weiterem Metallband unter gleichzeitiger Drehung um seine Längsachse in Richtung derselben mit einer Geschwindigkeit V_{R} vorgeschoben. Dabei wird es auf Stützeinrichtungen 51 geführt. Um nur Rohrstücke bestimmter Länge mit exakt normal auf die Rohrachse liegenden Schnittebenen zu erhalten, ohne den Zufuhr- und Schweißprozeß unterbrechen zu müssen, wird die Schneideeinrichtung 6 mit dem Rohr mitgeführt. Diese Einrichtung 6 ist nach einem Merkmal der Erfindung ein Plasmaschneider, der mit zumindest einer Rolle 61, vorzugsweise drei oder vier Rollen 61, versehen ist. Die Achsen dieser Rollen sind im wesentlichen parallel zur Rohrachse ausgerichtet, sodaß bei Aufsetzen der Rollen auf die Rohroberfläche, bei gleichzeitiger Unterbindung von Bewegungen der Schneideeinrichtung 6 in Umfangsrichtung des Rohres 5 der Plasmaschneider mit dem Rohr auf einer geraden, parallel zur Rohrachse liegenden Linie mit der Vorschubgeschwindigkeit V_{R} des Rohres mitgeführt wird. In Kombination mit der Drehung des Rohres um seine Achse ergibt sich daher eine völlig ebene, exakt normal auf die Rohrachse liegende Schnittebene. Beim Plasmaschneiden kommt es allerdings zum Anlegen von heißem Material, das von der Schnittstelle wegspritzt, mit ähnlichen Folgen, wie eingangs für das Schweißen beschrieben, und zur Bildung feinen Staubes, der sich gleichfalls an der Innenwandung des Rohres anlegt. Das würde also zu einer Veränderung der Eigenschaften des Rohrmaterials mit nachteiligen Folgen führen.

Um nun bei der bei der Herstellung des Rohres, d.h. beim Schweißen und beim Plasmaschneiden die Werkstoffeigenschaften nicht zu verändern, d.h. die Metalloxidbildung beim Schweißen und das Anlegen von heißen Materialspritzern und Stäuben zu verhindern, ist erfindungsgemäß vorgesehen, daß in einem exakt bestimmten Bereich um den Schweißpunkt herum das Rohr mit Formiergas anzufüllen, und nach einem weiteren Merkmal auch die Rohrinnenwandung im Bereich des Plasmaschneiders durch einen Einsatz (siehe dazu Fig. 2 und 3) zu schützen, sowie die Luft aus dem Inneren dieses Einsatzes abzusaugen.

Das Formiergas, ein Gemisch von etwa 90 Vol.-% Argon und 10 Vol.-% Wasserstoff, wird über die Zuleitung 7 aus einem Behälter 71 zugeführt. Der Wasserstoff des Formiergases ergibt mit eventuell noch vorhandenem bzw. eindringendem Sauerstoff ein brennbares Gemisch, das durch die Temperatur des Schweißbrenners entzündet wird, wodurch der Sauerstoff nicht mit dem Metall der Rohrinnenwandung reagieren kann. Eine Bedienungsvorrichtung 72 sorgt dafür, daß über ein Ventil (siehe dazu Fig. 2 und 3) die vor der Formiergaseinleitung im Rohr befindliche Luft entweichen kann. Die aus dem Einsatz 96 im Schneidebereich abgesaugte Luft wird über eine Absaugleitung 8 von einem Absaugventilator 81 entfernt. Die Absaugung kann kontinuierlich stattfinden, also auch nur während der Schneidevorgänge, dabei allenfalls geringfügig länger, um eine weitestgehende Entfernung der Stäube zu gewährleisten.

Ein Ausführungsbeispiel für eine Vorrichtung gemäß der Erfindung, die zur Ausführung des zuvor beschriebenen Verfahrens dient, ist in den Fig. 2 und 3 dargestellt.

Der Bereich, in den das Schutzgas gefüllt wird, ist einerseits durch die Rohrinnenwandung selbst begrenzt, und im Inneren des Rohres 5 sind zwei Abdichtwände 90, 91 in einem bestimmten Abstand voneinander angeordnet. Die Seitenkanten dieser Abdichtwände sind mit Dichtungen, vorzugsweise aus Teflon, versehen, die an der Rohrinnenwandung anliegen. Sie sind im wesentlichen auch während der Dreh- und Vorschubbewegung des Rohres funktionsfähig. Die geringen Formiergasverluste, die dennoch auftreten, können etwa durch kontinuierliche Zuführung einer geringen Gasmenge pro Zeiteinheit ausgeglichen werden. Nach einer vorteilhaften Ausgestaltung ist im Bereich zwischen den Abdichtwänden in der "Formiergaskammer" 92 ein Meßfühler für den Sauerstoffgehalt vorgesehen, der erst bei Überschreiten eines bestimmten Grenzwertes die Einleitung von Gas in die Kammer 92 auslöst, was zu einer Senkung des Gasverbrauches führt. Die Einleitung erfolgt über einen mit einem Ventil 93 versehenen Einlaßstutzen 94, der mit der Leitung 7 verbunden werden kann. Die Luft, welche zu Beginn des Herstellungsprozesses in der Kammer 92 enthalten ist, wird durch das Formiergas über das Ventil 95, das über die Bedienungsvorrichtung 72 geöffnet und geschlossen werden kann, aus der Kammer verdrängt. Auch hier kann der erwähnte Sauerstoff-Meßfühler vorteilhafterweise zur Senkung des Gasverbrauches dienen, da er die Absenkung des Sauerstoffgehaltes unter den für die Metalloxidbildung kritischen Grenzwert mißt. Andernfalls muß mit etwas Mehrverbrauch an Formiergas die Kammer 92 mit einer Gasmenge, die einem Vielfachen des Kammervolumens entspricht, gespült werden. In der Praxis hat sich das 5- bis 6-fache Volumen als ausreichend erwiesen.

Die Konstruktion der Formschnecke 3 und die Anordnung der Anpreßrollen 31, sowie die Position des Schweißpunktes machen eine spezielle Ausbildung der vor dem Schweißpunkt gelegenen Abdichtwand 90 erforderlich, wie in Fig. 4 abgebildet. Sie ist aus zwei halbkreisförmigen und einem rechteckigen Element derart aufgebaut, daß das rechteckige Element 90' kurz nach dem Aneinanderstoßen der einzelnen Bandwindungen und bezüglich der Drehrichtung des Rohres etwas vor dem Schweißpunkt mit einer Seitenkante an der Rohrinnenwandung dichtend anliegt, mit seiner zweiten Seitenkante im wesentlichen an der gegenüberliegenden Rohrwandung dichtend anliegt, und an den, quer zur Rohrachse A liegenden Seiten die beiden halbkreisförmigen Elemente 90'', 90''' im wesentlichen senkrecht zur Ebene des rechteckigen Elementes angeordnet sind, wobei dasjenige Element, das sich in Rohrvorschubrichtung vor dem Schweißpunkt befindet, bezüglich des rechteckigen Elementes auf derselben Seite wie der Schweißpunkt angebracht ist, und das zweite halbkreisförmige Element in Rohrvorschubrichtung hinter und bezüglich des rechteckigen Elementes gegenüber dem Schweißpunkt angebracht ist.

Das rechteckige Wandelement 90' muß gleichzeitig auch eine Schutzfunktion erfüllen. Es schirmt die Schweißstelle im Rohr ab, sodaß eventuelle Materialspritzer aufgefangen werden und nicht an der Rohrinnenseite zu Beeinträchtigungen der Eigenschaften führen. Je nach Bedarf kann dazu das Wandelement 90' in das Innere der Formiergaskammer 92 hinein, über die Kante mit dem halbkreisförmigen Teil 90'' hinaus, beliebig verlängert werden.

Der Abstand der zweiten Abdichtwand 91 vom Schweißpunkt ergibt sich aus der Bedingung, daß die Schweißnaht auf eine Temperatur abgekühlt sein soll, bei der keine Reaktion zwischen Rohrmaterial und Luftsauerstoff erfolgt. Für Edelstahl, einem bevorzugt eingesetzten Material, bedeutet das eine Abkühlung unter ca. 300°C, bevor die Schweißnaht mit dem Luftsauerstoff in Berührung kommen darf. Daraus folgt wiederum für Edelstahl, beispielsweise bei den üblichen Schweißgeschwindigkeiten und einem Rohrdurchmesser von ca. 15 cm eine Länge der Schutzgaskammer 92 von etwa 40 bis 60 cm. Um die erfindungsgemäße Vorrichtung an unterschiedliche Bedingungen anpassen zu können, ist die zweite Abdichtwand 91 vorteilhafterweise entlang der Rohrlängsachse A verschiebbar, aber in beliebiger Position fixierbar, montiert. Damit ist es möglich, die Formiergaskammer 92 auf verschiedene Steigungen der Bandwindung, verschiedene Schweißgeschwindigkeiten und daraus folgende unterschiedliche Vorschubgeschwindigkeit als auch auf verschiedenes Material, bezüglich Reaktionstemperaturen mit Sauerstoff bzw. Abkühlgeschwindigkeiten abzustimmen. Nach der Formiergaskammer ist nach einem weiteren Merkmal der Erfindung ein Einsatz 96 aus Metall, vorzugsweise aus dem selben Material, aus dem das Rohr gefertigt wird, angeordnet. Dieser Einsatz ist ein Hohlkörper, der bis auf einen kleinen Bereich um die Schnittlinie des Plasmaschneiders 6, wo ein Ausschnitt 97 vorgesehen ist, die Innenwandung des Rohres gegenüber der Schnittlinie abschirmt. Darüberhinaus steht das Innere des Einsatzes 96 über ein Absaugrohr 98 mit der Absaugleitung 8 in Verbindung, sodaß die staubhaltige Luft aus dem Einsatz abgesaugt werden kann. Der Einsatz 96 bewirkt also einen Schutz der Innenwandung des Rohres beim Plasmaschneiden vor Materialspritzern bzw. durch die Absaugung der staubhaltigen Luft vor Anlegen von Staub.

Die Ausschnittsform des Einsatzes 96 ist im allgemeinen nicht von Bedeutung, solange dadurch der gesamte Umfangsbereich der Innenwandung des Rohres abgeschirmt wird. Eine vorteilhafte Ausgestaltung sieht jedoch vor, daß der Einsatz 96 von der Formiergaskammer 92 etwas beabstandet, und an seiner, der besagten Kammer zugewandten Stirnseite von einer in ihrer Größe der zweiten Abdichtwand entsprechenden Stirnwand 99 mit einer über den gesamten Umfang an der Rohrinnenwandung anliegenden Dichtung, vorzugsweise aus Teflon, versehen ist. Diese Anordnung sorgt im Falle einer größeren Undichtheit der zweiten Abdichtwand 91 dafür, daß nicht sofort alles Gas aus der Kammer 92 durch das Rohr 98 abgesaugt wird.

Vorteilhafterweise ist entweder ein Teil des Einsatzes 96 selbst, welcher der Schnittstelle gegenüberliegt oder eine zumindest teilweise Innenauskleidung 100, vorzugsweise aus Aluminiumblech, auswechselbar, sodaß bei Beschädigungen durch Materialspritzer nach längerdauernder Benützung nicht der gesamte Einsatz gewechselt werden muß.

Zum Schutz der Innenwandung des Einsatzes 96 kann jedoch auch eine Behandlung mit handelsüblichen chemischen Schweißtrennmitteln erfolgen, sodaß die Materialspritzer nicht an der Innenwandung haften bleiben und diese leicht gereinigt werden kann.

Der Einsatz 96 ist schließlich noch mit mindestens einer, vorzugsweise zwei Lagerrollen 101 versehen. Diese sind vorteilhafterweise höhenverstellbar ausgeführt und werden derart angeorndet bzw. eingestellt, daß der Einsatz 96 und damit die gesamte erfindungsgemäße Vorrichtung genau mittig im Rohr 5 liegt. Dadurch wird vermieden, daß die Dichtungen der Abdichtwände 90, 91 und der Stirnwand 99 einseitig abgenützt oder durch übermäßige Belastungen beschädigt werden. Die Lager 101 wirken weiters mit wenigstens einer der Stützeinrichtungen 51, z.B. ebenfalls mit Rollen 52 ausgestattet, an der Rohraußenseite zusammen, um die gesamte Anordnung, d.h. das Rohr samt der Vorrichtung, abzustützen.

Der soeben beschriebene Einsatz 96 erfüllt seine Aufgabe des Schutzes der Rohrinnenwandung umso besser, je kleiner der Ausschnitt 97 gemacht werden kann. Dazu trägt schon die weiter oben beschriebene Montage von Rollen 61 am Plasmaschneider bei. Eine weitere Verbesserung der Schnittgenauigkeit und damit der möglichen Verkleinerung des Ausschnittes 97 zur Verbesserung der Schutzwirkung des Einsatzes 96 ist durch weitere Automatisierung möglich. Dazu könnte eine automatische, z.B. computergesteuerte Einrichtung vorgesehen sein, die den Plasmaschneider 6 beweglich trägt und das selbsttätige Aufsetzen desselben mit der oder den Rollen 61, das Ein- und Ausschalten des Schneiders 6, sowie das Mitführen, Abheben und Zurückversetzen in die Ausgangsstellung erlaubt. Die Steuersignale dafür könnten, nach einer vorteilhaften Ausgestaltung, von Signalgeber-Einrichtungen, wie z.B. Lichtschranken, geliefert werden, die vom Plasmaschneider und vom Rohr selbst ausgelöst werden können.

## Patentansprüche

1. Verfahren zur Herstellung von Rohren aus einem Metallband, wobei das Metallband (2) unter einem spitzen Winkel zur Rohrachse entsprechend der gewünschten Steigung der Windungen kontinuierlich zugeführt und anschließend in einer Formschnecke (3) auf den gewünschten Durchmesser zurechtgeformt wird, anschließend die Windungen kontinuierlich und unter Einsatz eines Formiergases miteinander verschweißt und schließlich Rohrstücke gewünschter Länge abgeschnitten werden, dadurch gekennzeichnet, daß das Innere des Rohres (5) in einem exakt begrenzten Bereich um den Schweißpunkt mit dem Formiergas gefüllt wird, wobei die Mindestlänge des gasgefüllten Bereiches (92) dadurch exakt bestimmt wird, daß die Schweißnaht bei Verlassen des besagten Bereiches (92) auf eine Temperatur abgekühlt ist, bei der keine Reaktion zwischen dem Rohrmaterial und dem Luftsauerstoff erfolgt.

2. Verfahren nach Anspruch 1, dadurch gekennzeichnet, daß der Sauerstoffgehalt im Inneren des Formiergasbereiches (92) gemessen wird und bei Überschreiten eines Grenzwertes die Gaszufuhr eingeleitet wird.

3. Verfahren nach Anspruch 1, dadurch gekennzeichnet, daß die Rohrstücke während des Vorschubes durch einen mitgeführten Plasmaschneider (6) geschnitten werden und die Rohrinnenwandung im Bereich des Plasmaschneiders (6) bis auf einen kleinen Ausschnitt um den eigentlichen Schnittbereich durch einen Einsatz (96) vor Materialspritzern und Staubablagerungen geschützt wird.

4. Verfahren nach Anspruch 3, dadurch gekennzeichnet, daß die Luft aus dem Inneren des besagten Einsatzes (96) zumindest während des Schneidevorganges abgesaugt wird.

5. Vorrichtung zur Durchführung des Verfahrens nach Anspruch 1, enthaltend eine feststehende Zuführeinrichtung (1) für das Metallband (2), eine Formschnecke (3) mit innenliegenden Anpreßrollen (31) zur Umlenkung des Metallbandes auf den gewünschten Durchmesser, einen Schweißkopf (4) zum Verschweißen der Windungen miteinander und einer Schneideeinrichtung (6) zum Abschneiden der Rohre, dadurch gekennzeichnet, daß im Inneren des gewendelten Bandes,von der Stelle an, an der die Bandwindungen aneinanderliegen, eine Abdichtwand (90) vorgesehen ist, daß eine zweite, etwas weiter in Rohrvorschubrichtung gelegene Abdichtwand (91) vorgesehen ist, die mit der ersten Wand und der Rohrinnenwandung eine Kammer (92) bildet und daß in der ersten Wand (90) ein Ventil (93) zum Einlassen eines Formiergases in besagte Kammer (92) und in der zweiten Wand (91) ein Ventil (95) zum Auslassen der anfänglich in der Kammer (92) befindlichen Luft angeordnet ist.

6. Vorrichtung nach Anspruch 5, dadurch gekennzeichnet, daß die an der Rohrinnenwandung anliegenden Kanten der Abdichtwände mit Dichtungen versehen sind.

7. Vorrichtung nach Anspruch 5 oder 6, dadurch gekennzeichnet, daß die erste Abdichtwand (90) aus zwei halbkreisförmigen und einem rechteckigen Element derart aufgebaut ist, daß das rechteckige Element (90') kurz nach dem Aneinanderstoßen der einzelnen Bandwindungen und bezüglich der Drehrichtung des Rohres etwas vor dem Schweißpunkt mit einer Seitenkante an der Rohrinnenwandung dichtend anliegt, mit seiner zweiten Seitenkante an der gegenüberliegenden Rohrwandung dichtend anliegt, und an den, quer zur Rohrachse (A) liegenden Seiten die beiden halbkreisförmigen Elemente (90'', 90''') angeordnet sind, wobei dasjenige Element (90''), das sich in Rohrvorschubrichtung vor dem Schweißpunkt befindet, bezüglich des rechteckigen Elementes auf derselben Seite wie der Schweißpunkt angebracht ist, und das zweite halbkreisförmige Element (90''') in Rohrvorschubrichtung hinter und bezüglich des rechteckigen Elementes gegenüber dem Schweißpunkt angebracht ist.

8. Vorrichtung nach Anspruch 7, dadurch gekennzeichnet, daß das rechteckige Element (90') über das halbkreisförmige Element (90''') hinausgehend in die Formiergaskammer (92) hineinragt.

9. Vorrichtung nach Anspruch 5, dadurch gekennzeichnet, daß die zweite Abdichtwand (91) entlang der Rohrlängsachse (A) verschiebbar und in beliebigen Positionen fixierbar ist.

10. Vorrichtung nach Anspruch 5, dadurch gekennzeichnet, daß im Inneren der besagten Kammer ein Sauerstoff-Meßfühler angeordnet ist.

11. Vorrichtung nach Anspruch 5, dadurch gekennzeichnet, daß ein Plasmaschneider (6) zum Schneiden der Rohrstücke vorgesehen ist, und im Inneren des Rohres, zumindest über die Länge des Weges, den der Plasmaschneider (6) zurücklegt, ein Einsatz (96) angeordnet ist, der die Innenwandung des Rohres bis auf einen kleinen Ausschnitt (97) um die Schnittlinie herum abdeckt und derart vor Materialspritzern und Staubablagerungen schützt.

12. Vorrichtung nach Anspruch 11, dadurch gekennzeichnet, daß zumindest ein Teil der Innenwand des Einsatzes (96) austauschbar oder durch eine austauschbare, zumindest teilweise Innenauskleidung (100), geschützt ist.

13. Vorrichtung nach Anspruch 11, dadurch gekennzeichnet, daß der Einsatz (96) von der Formiergaskammer (92) etwas beabstandet und an seiner, der besagten Kammer zugewandten Stirnseite von einer in ihrer Größe der zweiten Abdichtwand entsprechenden Stirnwand (99) mit einer über den gesamten Umfang an der Rohrinnenwandung anliegenden Dichtung versehen ist.

14. Vorrichtung nach Anspruch 11, dadurch gekennzeichnet, daß eine Absaugeinrichtung (81) vorhanden ist, welche die stauberfüllte Luft aus dem Inneren des besagten Einsatzes (96) absaugt.

15. Vorrrichtung nach Anspruch 14, dadurch gekennzeichnet, daß das Absaugrohr (98) der Absaugeinrichtung (81) von dem besagten Einsatz (96) durch die Formiergaskammer (92) hindurch nach außen geführt ist.

## Claims

1. A method of manufacturing tubes from a metal strip, wherein the metal strip (2) is continuously supplied at an acute angle to the tube axis according to the desired pitch of the turns and then formed to the desired diameter in a forming scroll (3), wherein the turns are then continuously welded together using a forming gas and, finally, tube sections of the desired length cut off, characterised in that the interior of the tube (5) is filled with the forming gas in a precisely demarcated region around the welding point, the minimum length of the gas-filled region (92) being precisely determined by the fact that on leaving the said region (92), the welding seam is cooled to a temperature at which no reaction occurs between the tube material and the atmospheric oxygen.

2. A method according to claim 1, characterised in that the oxygen content in the interior of the forming gas region (92) is measured and the gas supply started when a limit value is exceeded.

3. A method according to claim 1, characterised in that the tube sections are cut during the feed process by an entrained plasma cutter (6) and the inner wall of the tube in the region of the plasma cutter (6) is protected from material splashes and dust deposits as far as a small cut-out around the actual cutting region by means of an insert (96).

4. A method according to claim 3, characterised in that the air is sucked from the interior of the said insert (96) at least during the cutting process.

5. A device for carrying out the method according to claim 1, comprising a stationary feeding arrangement (1) for the metal strip (2), a forming scroll (3) with internal contact rollers (31) for turning the metal strip to the desired diameter, a welding head (4) for welding the turns together and a cutting arrangement (6) for cutting off the tubes, characterised in that a sealing wall (90) is provided in the interior of the coiled strip from the point at which the strip turns adjoin each other, in that a second sealing wall (91) located further on in the feed direction of the tube is provided which forms a chamber (92) with the first wall and the inner wall of the tube, and in that a valve (93) is arranged in the first wall (90) for admitting a forming gas into the said chamber (92) and a valve (95) is arranged in the second wall (91) for releasing the air initially in the chamber (92).

6. A device according to claim 5, characterised in that the edges of the sealing walls are provided with seals, the said edges abutting against the inner wall of the tube.

7. A device according to claim 5 or 6, characterised in that the first sealing wall (90) is constructed from two semicircular and one rectangular element in such a way that, shortly after the individual strip turns adjoin each other and, with respect to the direction of rotation of the tube, just in front of the welding point, one lateral edge of the rectangular element (90') abuts against the inner wall of the tube so as to form a seal, the second lateral edge abuts against the opposite tube wall so as to form a seal and the two semicircular elements (90'', 90''') are arranged on the sides lying transversely to the tube axis (A), the element (90'') located in front of the welding point in the feed direction of the tube being arranged on the same side as the welding point with respect to the rectangular element, and the second semicircular element (90''') being arranged behind the welding point in the feed direction of the tube and opposite the welding point with respect to the rectangular element.

8. A device according to claim 7, characterised in that the rectangular element (90') projects beyond the semicircular element (90''') into the forming gas chamber (92).

9. A device according to claim 5, characterised in that the second sealing wall (91) is displaceable along the longitudinal axis (A) of the tube and can be fixed in any position.

10. A device according to claim 5, characterised in that an oxygen measuring sensor is arranged in the interior of the said chamber.

11. A device according to claim 5, characterised in that a plasma cutter (6) is provided for cutting the tube sections, and in the interior of the tube, at least over the length of the path covered by the plasma cutter (6), an insert (96) is arranged which covers the inner wall of the tube as far as a small cut-out (97) around the cutting line and in this manner protects it from material splashes and dust deposits.

12. A device according to claim 11, characterised in that at least part of the inner wall of the insert (96) is exchangeable or is protected by an exchangeable, at least partial inner lining (100).

13. A device according to claim 11, characterised in that the insert (96) is at a distance from the forming gas chamber (92) and, on the side of its end wall (99) facing the said chamber, is provided with a seal abutting against the inner wall of the tube over the entire circumference, the said end wall (99) corresponding in size to the second sealing wall.

14. A device according to claim 11, characterised in that a suction arrangement (81) is provided which sucks the dust-laden air from the interior of the said insert (96).

15. A device according to claim 14, characterised in that the suction pipe (98) of the suction arrangement (81) is guided from the said insert (96) out through the forming gas chamber (92).

## Revendications

1. Procédé de fabrication de tubes à partir d'une bande métallique, la bande métallique (2) étant alimentée en continu, sous un angle aigu par rapport à l'axe du tube, suivant le pas voulu pour les spires et ajustée ensuite au diamètre voulu dans une vis de formage sans fin (3), les spires étant ensuite soudées entre elles en continu et par utilisation d'un gaz de formage et des pièces tubulaires étant enfin coupées à la longueur voulue, caractérisé en ce que l'intérieur du tube (5) est rempli avec du gaz de formage, dans une zone exactement limitée autour du point de soudure, la longueur minimale de la zone (92) remplie de gaz étant exactement déterminée par le fait que le cordon de soudure, à la sortie de la zone (92) mentionnée, est refroidi à une température pour laquelle aucune réaction ne se produit entre le matériau du tube et l'oxygène de l'air.

2. Procédé selon la revendication 1, caractérisé en ce que la teneur en oxygène à l'intérieur de la zone (92) remplie de gaz de formage est mesurée et en ce que l'arrivée de gaz est amorcée en cas de dépassement d'une valeur limite.

3. Procédé selon la revendication 1, caractérisé en ce que les pièces tubulaires sont coupées pendant l'avance, par un coupeur à plasma (6), entraîné, et la paroi intérieure des tubes est protégée contre les projections de matière et les dépôts de poussière dans la zone du coupeur à plasma (6), à l'exception d'une petite découpe entourant la zone de coupe proprement dite, par un insert (96).

4. Procédé selon la revendication 3, caractérisé en ce que l'air est aspiré à partir de l'intérieur de l'insert (96), au moins pendant l'opération de coupe.

5. Dispositif pour la mise en oeuvre du procédé selon la revendication 1, comportant un dispositif d'alimentation (1) fixe pour la bande métallique (2), une vis sans fin de formage (3) avec galets de pression (31) intérieurs destinés à amener la bande métallique au diamètre voulu, une tête de soudage (4) pour souder les spires entre elles et un dispositif de coupe (6) pour couper les tubes, caractérisé en ce qu'à l'intérieur de la bande enroulée, à partir du point contre lequel les spires de bande s'appliquent les unes contre les autres, il est prévu une paroi d'étanchéité (90), en ce qu'il est prévu une seconde paroi d'étanchéité (91), située un peu plus loin dans le sens d'avance des tubes, qui forme une chambre (92) avec la première paroi et la paroi intérieure des tubes et en ce que dans la première paroi (90) il est prévu une soupape (93) destinée à introduire un gaz de formage dans la chambre (92) citée et dans la seconde paroi (91), une soupape (95) pour laisser échapper l'air se trouvant initialement dans la chambre (92).

6. Procédé selon la revendication 5, caractérisé en ce que les bords des parois d'étanchéité sont pourvus de garnitures d'étanchéité, bords qui s'appliquent contre la paroi intérieure des tubes.

7. Procédé selon les revendications 5 ou 6, caractérisé en ce que la première paroi d'étanchéité (90) est constituée de deux éléments semi-circulaires et d'un élément rectangulaire, de sorte que l'élément rectangulaire (90') s'applique, de manière étanche, avec un côté latéral, contre la paroi intérieure du tube juste après la réunion des différentes spires de la bande et, par rapport au sens de rotation du tube, légèrement avant le point de soudure, et de sorte qu'avec son second côté latéral cet élément rectangulaire s'applique de manière étanche contre la paroi de tube opposée et en ce que les deux éléments (90'', 90''') semi-circulaires sont placés sur les côtés s'étendant transversalement à l'axe du tube (A), l'élément (90'') qui se trouve devant le point de soudure, dans le sens d'avance des tubes, étant appliqué par rapport à l'élément rectangulaire sur le même côté que le point de soudure, et le second élément semi-circulaire (90''') étant appliqué derrière, dans le sens d'avance des tubes, et par rapport à l'élément rectangulaire, en face du point de soudure.

8. Procédé selon la revendication 7, caractérisé en ce que l'élément rectangulaire (90') s'engage, au-delà de l'élément semi-circulaire (90'''), dans la chambre de gaz de formage (92).

9. Procédé selon la revendication 5, caractérisé en ce que la seconde paroi d'étanchéité (91) peut être déplacée le long de l'axe longitudinal (A) du tube et être fixée dans n'importe quelle position.

10. Dispositif selon la revendication 5, caractérisé en ce qu'une sonde de mesure d'oxygène est placée à l'intérieur de la chambre précitée.

11. Dispositif selon la revendication 5, caractérisé en ce qu'il est prévu un coupeur à plasma (6) pour couper les pièces tubulaires et en ce qu'il est prévu à l'intérieur du tube, au moins sur la longueur du parcours que franchit le coupeur à plasma (6), un insert (96) qui recouvre la paroi intérieure du tube, à l'exception d'une petite découpe (97) autour de la ligne de coupe et qui la protège ainsi contre les projections de matière et les dépôts de poussière.

12. Dispositif selon la revendication 11, caractérisé en ce qu'une partie au moins de la paroi intérieure de l'insert (96) est remplaçable ou est protégée par un revêtement intérieur (100) qui peut être changé, au moins partiellement.

13. Dispositif selon la revendication 11, caractérisé en ce que l'insert (96) est légèrement éloigné de la chambre de gaz de formage (92) et est pourvu, sur son côté frontal tourné vers ladite chambre, d'une paroi frontale (99), correspondant dans ses dimensions à la seconde paroi d'étanchéité, avec une garniture d'étanchéité s'appliquant totalement contre la paroi intérieure du tube.

14. Dispositif selon la revendication 11, caractérisé en ce qu'il est prévu un dispositif d'aspiration (81) qui aspire l'air chargé de poussière de l'intérieur de l'insert (96) précité.

15. Dispositif selon la revendication 14, caractérisé en ce que le tube d'aspiration (98) du dispositif d'aspiration (81) est guidé vers l'extérieur, à partir de l'insert (96) précité, à travers la chambre de gaz de formage (92).
